# EUROPÄISCHE PATENTSCHRIFT

(11) **EP 0 500 825 B1**
(45) Veröffentlichungstag und Bekanntmachung des Hinweises auf die Patenterteilung: **15.02.1995**
(21) Anmeldenummer: 91912376.0
(22) Anmeldetag: 09.07.1991
(51) Int. Cl.: B60T 8/40, F04B 49/02

(54) **KOLBENPUMPE**
RECIPROCATING PUMP
POMPE A PISTONS

(30) Priorität: 03.09.1990 DE 4027848
(43) Veröffentlichungstag der Anmeldung: 02.09.1992
(73) Patentinhaber: ITT Automotive Europe GmbH, 60488 Frankfurt (DE)
(72) Erfinder: BURGDORF, Jochen, D-6050 Offenbach (DE)
(86) Internationale Anmeldenummer: EP9101277
(87) Internationale Veröffentlichungsnummer: WO9204216

(56) Entgegenhaltungen:
- DE-A- 1 925 306
- DE-A- 3 248 364
- DE-A- 3 808 901
- FR-A- 2 157 546
- PATENT ABSTRACTS OF JAPAN volume 11, No. 48 (M-561)(2495) 13 February 1987 & JP-A-61 211154

## Beschreibung

Die Erfindung betrifft eine Kolbenpumpe, insbesondere für eine hydraulische Bremsschlupfregelanlage, mit einem Pumpengehäuse mit mindestens eiem Arbeitsraum, der über ein Einlaßventil und ein Auslaßventil an Förderleitungen anschließbar ist, und mit einem in den Arbeitsraum hineinbewegbaren Arbeitskolben, der zur Ausführung von Hubbewegungen antreibbar ist.

Eine Kolbenpumpe der angegebenen Art ist aus der DE-A 38 08 901 bekannt. Bei verschiedenen Anwendungen derartiger Kolbenpumpen, beispielsweise auch bei einer Anwendung der Kolbenpumpe in einer Bremsschlupfregelanlage zur Rückförderung des Druckmittels von den Radbremsen in den Hauptbremszylinder findet eine Regelung der der Pumpe zugeführten Fördermenge auf der Saugseite statt. Hierdurch kann es vorkommen, daß die Druckmittelzufuhr auf der Saugseite geringer ist als die Förderleistung der Pumpe, so daß es im Arbeitsraum der Pumpe zu Hohlsog und verbunden damit zu der Gefahr des Ansaugens von Luft über den Kolbenspalt kommt.

Aus der DE-A-19 25 306 ist eine gattungsgemäße Kolbenpumpe bekannt, deren zwischen zwei Endstellungen beweglicher Kolben während des Druckhubs des Arbeitskolbens in Richtung seiner zurückgezogenen Endstellung bewegt wird, diese aber nicht dauerhaft einnimmt, sondern von einer Feder gegen seinen vorgeschobenen, gehäusefesten Anschlag geschoben wird.

Dadurch wird eine Geräuschminderung durch verlangsamten Druckanstieg erreicht, da der eingentlich wirksame Druckhub sich aus der Differenz der Hübe von Kolben und Arbeitskolben ergibt.

Während des Saughubs kann sich bei dieser bekannten Pumpe ein Unterdruck im Arbeitsraum zwischen Kolben und Arbeitskolben einstellen, der sich bei einer zu geringen der Pumpe zugeführten Druckmittelmenge auf die saugseitig angeordneten druckmittelführenden Räume überträgt, wodurch die Gefahr eines Ansaugens von Luft besteht.

Der Erfindung liegt die Aufgabe zugrunde, eine Kolbenpumpe der eingangs genannten Art zu schaffen, deren Fördermenge von der Druckmittelzufuhr auf der Saugseite abhängig ist und bei der ein Hohlsog im Arbeitsraum, und somit die Gefahr des Ansaugens von Luft, vermieden wird.

Diese Aufgabe wird erfindungsgemäß durch die im kennzeichnenden Teil des Anspruchs 1 angegebenen Merkmale gelöst.

Bei der erfindungsgemäßen Kolbenpumpe verbleibt der Ladekolben in seiner zurückgezogenen Endstellung, solange der Druck im Arbeitsraum einen gewissen Wert nicht unterschreitet, d.h. solange eine ausreichende Druckmittelzufuhr auf der Saugseite gewährleistet ist. Bei einem unterhalb des genannten Wertes liegenden Druck im Arbeitsraum gleicht der Ladekolben durch seine Hubbewegung beim Saughub des Arbeitskolbens die fehlende Druckmittelzufuhr aus, so daß lediglich die Druckmittelmenge angesaugt wird, die über das Saugventil in den Arbeitsraum gelangt. Die während eines Saughubs des Arbeitskolbens angesaugte Druckmittelmenge kann somit zwischen Null und dem Hubvolumen des Arbeitskolbens liegen. Auf diese Weise wird ein Hohlsog im Arbeitsraum vermieden. Je nach Bewegungswiderstand des Ladekolbens tritt allenfalls ein geringer Unterdruck im Arbeitsraum auf, ohne daß jedoch die Gefahr des Luftansaugens besteht.

Um einen Unterdruck im Arbeitsraum beim Ansaughub zu vermeiden, kann in weiterer Ausgestaltung der Erfindung der Ladekolben durch am Pumpengehäuse abgestützte federnde Mittel in den Arbeitsraum hineinbewegbar sein. Durch die Kraft der federnden Mittel kann der Bewegungswiderstand des Ladekolbens kompensiert und darüberhinaus ein Ansaugdruck bestimmt werden, der in der saugseitigen Förderleitung vorliegen muß, damit die Kolbenpumpe Druckmittel aufnehmen und fördern kann. Für den Einsatz der Kolbenpumpe in einer Bremsschlupfregelanlage kann erfindungsgemäß vorgesehen sein, daß der Ladekolben durch einen Druck im Arbeitsraum von ca. 1 bis 2 bar in seiner zurückgezogenen Endstellung am Anschlag des Pumpengehäuses festhaltbar ist. Bei dieser Auslegung kann der Druck in der Bremsanlage ausreichend tief abgesenkt werden und die Gefahr des Luftansaugens nach dem Abschalten ist zuverlässig vermieden.

In einer vorteilhaften Weiterbildung der Erfindung kann vorgesehen sein, daß der Arbeitsquerschnitt von Ladekolben und Arbeitskolben gleich ist und daß der Arbeitskolben den Anschlag für eine Endstellung des Ladekolbens bildet. Hierdurch wird ein einfacher Aufbau ermöglicht und der Ladekolben kann durch mechanischen Kontakt von dem Arbeitskolben in die zurückgezogene Endstellung gebracht werden, wodurch die Zuverlässigkeit erhöht wird. Es ist weiterhin zweckmäßig, wenn der Ladekolben mit einem Dichtring gegenüber der Zylinderbohrung abgedichtet ist. Mit Hilfe des Dichtrings läßt sich der Bewegungswiderstand des Ladekolbens enger eingrenzen. Eine Vereinfachung der Kolbenpumpe läßt sich weiterhin dadurch erzielen, daß der Arbeitskolben und der Ladekolben in einer gemeinsamen Zylinderbohrung angeordnet sind. Hierbei ist es zweckmäßig, wenn der Ladekolben und/oder der Arbeitskolben auf seiner dem Arbeitsraum zugekehrten Stirnseite einen Ansatz aufweist, dessen Mantelfläche einen solchen Abstand von der Wand der Zylinderbohrung hat, daß der Strömungsweg zu dem Einlaßventil und dem Auslaßventil in allen Kolbenstellungen freibleibt. Die federnden Mittel können erfindungsgemäß aus einer Druckfeder bestehen, die in einer axialen Bohrung im Ladekolben angeordnet ist.

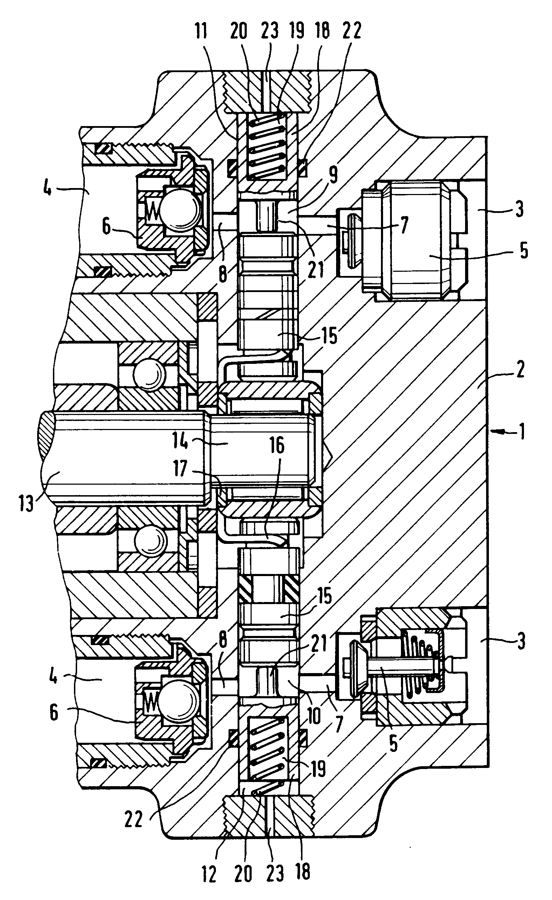

Die Erfindung wird nachfolgend anhand eines Ausführungsbeispiels näher erläutert, das in der Zeichnung dargestellt ist. Die Zeichnung zeigt einen Querschnitt durch eine erfindungsgemäß ausgestaltete Radialkolbenpumpe mit zwangsgeführten Kolben.

Die dargestellte Radialkolbenpumpe 1 weist ein Pumpengehäuse 2 mit Einlaßbohrungen 3 und Auslaßbohrungen 4 auf. In den Einlaßbohrungen 3 sind Einlaßventile 5 und in den Auslaßbohrungen 4 sind Auslaßventile 6 angeordnet. Von den Einlaßventilen 5 führen Bohrungen 7 und von den Auslaßventilen 6 Bohrungen 8 zu Arbeitsräumen 9, 10, die jeweils durch einen Abschnitt einer Zylinderbohrung 11, 12 gebildet sind. Die Zylinderbohrungen 11, 12 sind radial zu einer drehend antreibbaren Welle 13 mit einem Exzenter 14 angeordnet und enthalten jeweils einen Arbeitskolben 15, der durch einen Federring 16 gegen ein auf dem Exzenter 14 angeordnetes Wälzlager 17 gedrückt wird. Durch Drehung des Exzenters 14 werden die Arbeitskolben 15 in Hubbewegung versetzt. Radial nach außen werden die Arbeitsräume 9, 10 durch Ladekolben 18 begrenzt, die ebenfalls in den Zylinderbohrungen 11, 12 angeordnet sind und Bohrungen 19 haben, in denen am Pumpengehäuse 2 abgestützte Druckfedern 20 angeordnet sind. Die Ladekolben 18 ragen mit einem zylindrischen Ansatz 21, von gegenüber der Zylinderbohrung 11 bzw. 12 geringerem Durchmesser in den Arbeitsraum 9 bzw. 10 hinein und stützen sich unter der Wirkung der Druckfedern 20 mit den Ansätzen 21 jeweils an den Arbeitskolben 15 ab. Mit einem Dichtring 22 sind die Ladekolben 18 gegenüber der Zylinderbohrung 11 bzw. 12 abgedichtet. Die radial äußeren Enden der beiden Zylinderbohrungen 11, 12 stehen über eine Bohrung 23 mit der Atmosphäre in Verbindung.

Der durch die Reibung hervorgerufene Bewegungswiderstand der Ladekolben 18 und die Kraft der Druckfedern 20 sind so aufeinander abgestimmt, daß ein Druck von etwa 3 bis 5 bar in den Arbeitsräumen 9, 10 erforderlich ist, um die Ladekolben 18 radial nach außen in ihre Endstellung, in der sie am Pumpengehäuse 2 anliegen, zu bewegen. Durch die Umkehrung der Reibung bei der radial nach innen gerichteten Bewegung der Ladekolben 18, genügt ein Druck von 1 bis 2 bar in den Arbeitsräumen 9, 10, um die Ladekolben 18 in der radial äußeren Endstellung zu halten. Die volle, durch das Hubvolumen der Arbeitskolben 15 bestimmte Fördermenge wird daher solange erreicht, solange der Druck beim Saughub der Arbeitskolben 15 den genannten Wert nicht unterschreitet. Dies ist der Fall, wenn an den Eingangsbohrungen 3 ein Druck von wenigstens 3 bar herrscht und die zugeführte Druckmittelmenge ausreicht, um diesen Druck während des Saughubs aufrechtzuerhalten.

Wird die der Pumpe zugeführte Druckmittelmenge kleiner als ihre Fördermenge, so sinkt der Druck beim Öffnen der Einlaßventile 5 unter den zum Zurückhalten der Ladekolben 18 erforderlichen Druck, wodurch die Ladekolben 18 von den Druckfedern 20 in die Arbeitsräume 9, 10 hineinbewegt werden, um dadurch die unzureichende Druckmittelzufuhr auszugleichen. Wurde während der Ansaugphase noch eine Teilmenge an Druckmittel Zugeführt, so werden die Ladekolben 18 durch das in den Arbeitsräumen 9, 10 nach dem Schließen der Einlaßventile 5 vorhandene Druckmittelpolster in einem Abstand von den Arbeitskolben gehalten und durch dieses beim anschließenden Druckhub wieder in ihre radial äußere Endstellung gedrückt. Sobald die Ladekolben 18 am Pumpengehäuse 2 anliegen, kann in den Arbeitsräumen 9, 10 der Druck weiter ansteigen und die angesaugte Teilmenge über die Auslaßventile 6 verdrängt werden.

Wird die Druckmittelzufuhr an den Einlaßbohrungen 3 gesperrt, so legen sich die Ladekolben 18 mit ihren Zapfen 21 an den Arbeitskolben 15 an und werden durch den mechanischen Kontakt gemeinsam mit den Arbeitskolben 15 hin und her bewegt. Hierbei bleibt in den Arbeitsräumen 9, 10 ein Druckmittelpolster eingeschlossen, so daß es nicht zu Hohlsog und dem Ansaugen von Luft kommen kann.

### Bezugszeichenliste:

- 1: Radialkolbenpumpe
- 2: Pumpengehäuse
- 3: Einlaßbohrung
- 4: Auslaßbohrung
- 5: Einlaßventil
- 6: Auslaßventil
- 7: Bohrung
- 8: Bohrung
- 9: Arbeitsraum
- 10: Arbeitsraum
- 11: Zylinderbohrung
- 12: Zylinderbohrung
- 13: Welle
- 14: Exzenter
- 15: Arbeitskolben
- 16: Federring
- 17: Wälzlager
- 18: Ladekolben
- 19: Bohrung
- 20: Druckfeder
- 21: Zapfen
- 22: Dichtring
- 23: Bohrung

## Patentansprüche

1. Kolbenpumpe (1), insbesondere für eine hydraulische Bremsschlupfregelanlage, mit einem Pumpengehäuse (2) mit mindestens einem Arbeitsraum (9,10) der über ein Einlaßventil (5) und ein Auslaßventil (6) an Förderleitungen anschließbar ist, und mit einem in den Arbeitsraum (9,10) hineinbewegbaren Arbeitskolben (15), der zur Ausführung von Hubbewegungen antreibbar ist, sowie einem den Arbeitsraum (9,10) begrenzenden und zwischen zwei durch Anschläge bestimmten Endstellungen frei beweglichen Ladekolben (18), dessen Hubvolumen dem Volumen des Arbeitskolbens (15) entspricht, dadurch **gekennzeichnet,** daß der Ladekolben (18) in seiner zurückgezogenen Endstellung am Anschlag des Pumpengehäuses (2) gehalten wird, solange der Druck im Arbeitsraum (9,10) einen gewissen Wert nicht unterschreitet, und sich beim Unterschreiten dieses Wertes in den Arbeitsraum (9,10) hinein und gemeinsam und in einem Abstand mit dem Arbeitskolben (15) hin und her bewegen kann.

2. Kolbenpumpe nach Anspruch 1, dadurch gekennzeichnet, daß der Ladekolben (18) durch am Pumpengehäuse (2) abgestützte federnde Mittel (20) in den Arbeitsraum (9, 10) hineinbewegbar ist.

3. Kolbenpumpe nach einem der vorhergehenden Ansprüche, dadurch gekennzeichnet, daß die federnden Mittel aus einer Druckfeder (20) bestehen, die in einer axialen Bohrung (19) im Ladekolben (18) angeordnet ist.

4. Kolbenpumpe nach einem der vorhergehenden Ansprüche, dadurch gekennzeichnet, daß der Arbeitsquerschnitt des Ladekolbens (18) und des Arbeitskolbens (15) gleich ist und daß der Arbeitskolben (15) den Anschlag für eine Endstellung des Ladekolbens (18) bildet.

5. Kolbenpumpe nach einem der vorhergehenden Ansprüche, dadurch gekennzeichnet, daß der Ladekolben (18) mit einem Dichtring (22) gegenüber der Zylinderbohrung (11, 12) abgedichtet ist.

6. Kolbenpumpe nach einem der vorhergehenden Ansprüche, dadurch gekennzeichnet, daß der Arbeitskolben (15) und der Ladekolben (18) in einer gemeinsamen Zylinderbohrung (11, 12) angeordnet sind.

7. Kolbenpumpe nach einem der vorhergehenden Ansprüche, dadurch gekennzeichnet, daß der Ladekolben (18) und/oder der Arbeitskolben (15) auf seiner dem Arbeitsraum (9, 10) zugekehrten Stirnseite einen Ansatz (21) aufweist, dessen Mantelfläche einen solchen Abstand von der Wand der Zylinderbohrung (11, 12) hat, daß der Strömungsweg zu dem Einlaßventil (5) und dem Auslaßventil (6) in allen Kolbenstellungen frei bleibt.

## Claims

1. A piston pump (1), more particularly for use in a hydraulic brake slip control system, comprising a pump housing (2) with at least one working chamber (9, 10) which is connectible to supply lines via an inlet valve (5) and an outlet valve (6), and comprising a working piston (15) movable into the working chamber (9, 15) and drivable to perform stroke movements, as well as a charging piston (18) which confines the working chamber (9, 10) and is freely movable between two end positions defined by stops, the stroke volume of which corresponds to the stroke volume of the working piston (15), **characterised** in that the charging piston (18) is maintained in its retracted end position on the stop of the pump housing (2) as long as the pressure in the working chamber (9, 10) does not fall short of a specific value, and in the event of this value being fallen short of, is able to move into the working chamber (9, 10) and to move to and fro jointly with the working piston (15) at a distance therefrom.

2. A piston pump as claimed in claim 1,
**characterised** in that the charging piston (18) is movable into the working chamber (9, 10) by resilient means (20) supported on the pump housing (2).

3. A piston pump as claimed in any one of the preceding claims,
**characterised** in that the resilient means is a compression spring (20) accommodated in an axial bore (19) in the charging piston (18).

4. A piston pump as claimed in any one of the preceding claims,
**characterised** in that the operating cross-sections of the charging piston (18) and the working piston (15) are of equal size, and in that the working piston (15) forms the stop for an end position of the charging piston (18).

5. A piston pump as claimed in any one of the preceding claims,
**characterised** in that the charging piston (18) is sealed in relation to the cylinder bore (11, 12) by a ring seal (22).

6. A piston pump as claimed in any one of the preceding claims,
**characterised** in that the working piston (15) and the charging piston (18) are accommodated in one common cylinder bore (11, 12).

7. A piston pump as claimed in any one of the preceding claims,
**characterised** in that the charging piston (18) and/or the working piston (15) includes on its end face close to the working chamber (9, 10) an extension (21), the peripheral surface of which has such a distance from the wall of the cylinder bore (11, 12) that the flow route to the inlet valve (5) and the outlet valve (6) remains free in all piston positions.

## Revendications

1. Pompe (1) à pistons, notamment pour un système de régulation hydraulique du glissement de freinage, comprenant un boîtier de pompe (2), comportant au moins une chambre de travail (9, 10) qui est agencée de façon à pouvoir être raccordée à des tuyauteries de circulation par l'intermédiaire d'une valve d'entrée (5) et d'une valve de sortie (6), et un piston de travail (15), qui est agencé de façon à pouvoir se déplacer dans un sens et dans l'autre dans la chambre de travail (9, 10) et de façon à pouvoir être commandé en vue d'exécuter des mouvements de va-et-vient, ainsi qu'un piston de chargement (18) qui délimite la chambre de travail (9, 10) et est mobile librement entre deux positions extrêmes déterminées par des butées et qui balaye une cylindrée égale au volume balayé par le piston de travail (15), caractérisée en ce que, dans sa position extrême rétractée, le piston de chargement (18) est maintenu sur la butée du boîtier de pompe (2) tant que la pression dans la chambre de travail (9, 10) ne franchit pas une certaine valeur vers le bas et en ce que, lors du franchissement de cette valeur vers le bas, il peut se déplacer dans la chambre de travail (9, 10) et aller et venir d'une manière commune avec le piston de travail (15) et à une certaine distance de ce dernier.

2. Pompe à pistons selon la revendication 1, caractérisée en ce que le piston de chargement (18) est agencé de façon à pouvoir être déplacé dans un sens et dans l'autre dans la chambre de travail (9, 10) à l'aide de moyens (20) à action élastique qui prennent appui sur le boîtier de pompe (2).

3. Pompe à pistons selon l'une des revendications précédentes, caractérisée en ce que les moyens à action élastique sont constitués d'un ressort de compression (20) qui est disposé dans un alésage axial (19) ménagé dans le piston de chargement (18).

4. Pompe à pistons selon l'une des revendications précédentes, caractérisée en ce que la section transversale de travail du piston de chargement (18) et celle du piston de travail (15) sont égales et en ce que le piston de travail (15) constitue la butée correspondant à une position extrême du piston de chargement (18).

5. Pompe à pistons selon l'une des revendications précédentes, caractérisée en ce que l'étanchéité du piston de chargement (18) vis-à-vis de l'alésage cylindrique (11, 12) est assurée par une bague d'étanchéité (22).

6. Pompe à pistons selon l'une des revendications précédentes, caractérisée en ce que le piston de travail (15) et le piston de chargement (18) sont disposés dans un alésage cylindrique (11, 12) commun.

7. Pompe à pistons selon l'une des revendications précédentes, caractérisée en ce que le piston de chargement (18) et/ou le piston de travail (15) comportent, sur leur face frontale tournée vers la chambre de travail (9, 10), une partie en saillie (21) dont la surface périphérique présente, vis-à-vis de la paroi de l'alésage cylindrique (11, 12), un espacement tel que le chemin d'écoulement vers la valve d'entrée (5) et la valve de sortie (6) reste libre dans toutes les positions du piston.
